# EUROPEAN PATENT APPLICATION

(11) **EP 1 763 205 A1**
(43) Date of publication of application: **14.03.2007**
(21) Application number: 05740902.1
(22) Date of filing: 18.05.2005
(51) Int. Cl.: H04M 1/00, H04M 3/54

(54) **COMMUNICATION SYSTEM, TRANSFER CONTROL METHOD, TELEPHONE DEVICE USED FOR SAME, COMMUNICATION DEVICE, AND PROGRAM**

(30) Priority: 30.06.2004 JP 2004192392
(71) Applicant: NEC CORPORATION, Minato-ku, Tokyo 108-8001 (JP)
(72) Inventor: SAKATA, Kazuhiro, c/o NEC CORPORATION, Tokyo 1088001 (JP); KURASHIMA, Akihisa, c/o NEC CORPORATION, Tokyo 1088001 (JP)
(74) Representative: Vossius & Partner
(86) International application number: PCT/JP2005/009033
(87) International publication number: WO 2006/003758

(57) **Abstract**

To provide a communication system in which transfer through a telephone repeater can be performed even if the telephone device is different in manufacturer or type and even if the telephone device has a data communication function. A call requesting section sends identification information on the telephone called party (communication party) through a data processing section to a telephone call control server, records information on the called party (forwarding destination) telephone number in a called party data storage section, and calls a telephone repeater through a telephone processing section. The telephone repeater forwards the telephone call to the telephone device corresponding the called party telephone number information stored in the called party data storage section.

## Description

### TECHNICAL FIELD

The present invention relates to a communication system and a transfer control method together with a telephone device, a communication device and a program used for the same, in particular, a communication system having a call transfer processing function.

### BACKGROUND ART

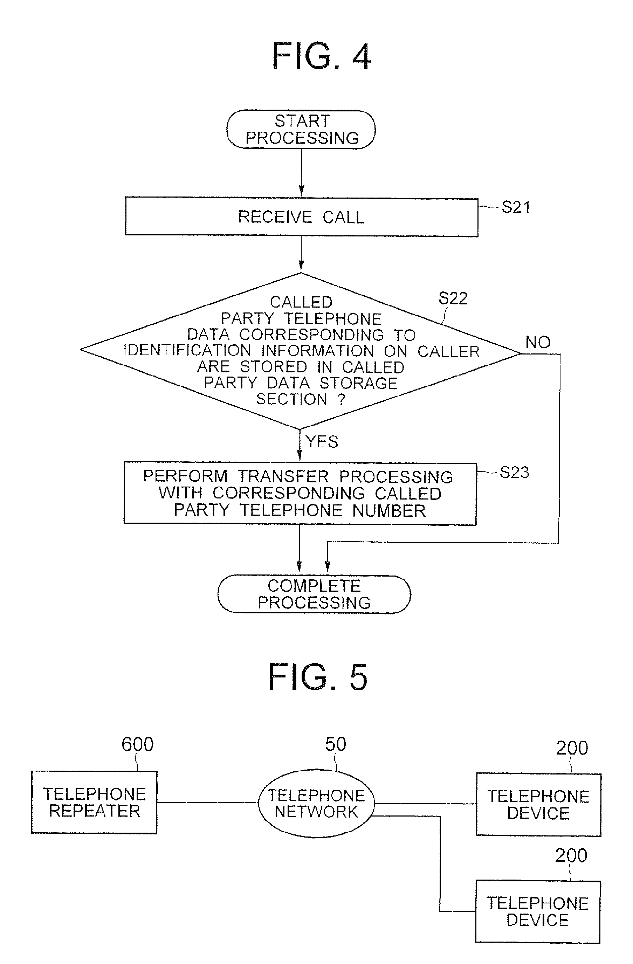

A common communication system with a call transfer processing function has, as shown in Fig. 5, a plurality of telephone devices 200, a telephone repeater 600, and a network 500 which is a telephone network for connecting the plurality of telephone devices 200 and the telephone repeater 600.

The telephone device 200 has a function of performing telephone call and receipt based on designation by a user. The telephone network 50 has a function of receiving a call request including designation for a called party from a telephone device 200 (hereinafter called A), and establishing communication with another telephone device 200 corresponding to the called party (hereinafter called B) or with the telephone repeater 600.

The telephone repeater 600 has a call transfer processing function in which the telephone repeater 600 establishes communication with a telephone device 200(A) and then transfers the communication to another telephone device 200 (B). Here, the call transfer processing is a process where the telephone repeater 600 makes it possible to establish telephone communication between a telephone device 200(A), which has performed a telephone call to the telephone repeater, and another telephone device 200(B) when the telephone repeater 600 receives a telephone call from the telephone device 200(A).

Hereinafter, a call transfer processing by the telephone repeater 600 will be described in detail. Upon connecting with the telephone device 200(A), the telephone repeater 600 receives information on destination designation from the telephone device 200(A) through the telephone network 50. A form and a transmitting method for the information on the destination designation are determined at the telephone repeater 600, and the telephone device 200(A) sends the information on the destination designation in accordance with the prescribed method. Next, the telephone repeater 600 is connected to another telephone device 200(B) corresponding to the destination designation through the telephone network 50, and establishes communication between the telephone device 200(A) and the telephone device 200 (B). Transfer is performed in accordance with the above process.

An example of a form and a transmitting method for the information on destination designation which is determined at the telephone repeater 600 is that "sending information on a destination from a telephone device by tone signal after communication is established".

The above call transfer processing is required, for example, in case where a telephone call received by a main switchboard in an office is transferred to a personal telephone of an office staff member. In such a case, the call transfer processing function of the telephone repeater 600 is used, and thereby call transfer can be performed.

Some telephone devices have a function of performing data communication through a network. In a conventional system, call transfer can be performed by even such telephone devices, with a method same as the above. With respect to the call transfer, there are recitations in the patent literatures 1 and 2.

[The Patent Literature 1] JP2-260739A
[The Patent Literature 2] JP3-044147A

### DISCLOSURE OF THE INVENTION

### PROBLEMS TO BE SOLVED BY THE INVENTION

In the conventional system as shown in Fig. 5, telephone number information on a forwarding destination is sent with a method determined by the telephone repeater 600 through the telephone network 50 when the transfer processing is performed. However, at the current situation, some telephone devices cannot send telephone number information on a forwarding destination using the method determined by the telephone repeater through the telephone network because of difference in manufacturers or types of telephone devices. By the same token, even if the telephone device has a data processing function and a data communication function, transfer processing using a telephone repeater cannot be performed sometimes.

An object of the present invention is to provide a communication system, a transfer control method, together with a telephone device, a communication device and a program used for the same which enables a telephone repeater to perform a transfer processing regardless of a difference in manufacturer or type of a telephone device.

Another object of the present invention is to provide a communication system, a transfer control method, together with a telephone device, a communication device and a program used for the same which enables a telephone device having a data processing function and a data communication function to perform a call transfer processing.

### MEANS OF SOLVING THE PROBLEMS

To achieve the above objects, a communication system according to the present invention comprises: a plurality of telephone devices, a communication device for transferring a telephone call received from one of the plurality of telephone devices to another telephone device, and a telephone network connecting the telephone devices and the communication device, wherein
the telephone devices have a function of sending identification information on a called party which indicates a destination telephone device; and
the communication device has functions of recording the identification information on the called party from the telephone device, and determining a telephone device of the called party based on the identification information on the called party upon receipt of a telephone call from the telephone device.

A transfer control method according to the present invention in a communication system including a plurality of telephone devices, a communication device for transferring a telephone call received from one of the plurality of telephone devices to another telephone device, and a telephone network for connecting the telephone devices and the communication device, the method comprises:
a sending step in which identification information on a called party is sent from the telephone device to the communication device,
a determining step in which the communication device determines a forwarding destination based on the recorded identification information on a called party upon receipt of a telephone call from the telephone device.

A telephone device used in a communication system according to the present invention is a telephone device which is connected to a telephone device of a called party through a communication device, and the telephone device has the function of:
sending the identification information on the called party for identifying the telephone device of the called party to the communication device in a preliminary stage of a telephone call to the called party.

A communication device used in a communication system according to the present invention is a communication device which connects a telephone device of a caller and a telephone device of a called party, and the communication device has the functions of:
recording identification information on the called party from the telephone device,
determining the telephone device of the called party based on the identification information on the called party upon receipt of a telephone call from the telephone device.

A communication program used in a communication system according to the present invention is a communication program with which a processing for connecting a telephone device of a caller and a telephone device of a called party through a communication device is conducted, and the communication program causes:
the telephone device to perform the function of sending identification information on a called party which indicates a destination telephone device,
the communication device to perform the functions of recording the identification information on the called party from the telephone device, and determining the telephone device of the called party based on the identification information on the called party upon receipt of a telephone call from the telephone device.

A communication program installed in a telephone device in a communication system according to the present invention causes: the telephone device connected to a telephone device of a called party through a communication device to perform a function of sending identification information on the called party for identifying the telephone device of the called party to the communication device in a preliminary stage of a telephone call to the called party. A communication program installed in a communication device in the communication system according to the present invention causes: the communication device which connects a telephone device of a caller and a telephone device of a called party to perform a function of recording identification information on the called party from the telephone device, and a function of determining the telephone device of the called party based on the identification information on the called party upon receipt of a telephone call from the telephone device.

The effect of the present invention will be explained. When a telephone call is received from the telephone device and transferred to another telephone device at the repeater (a communication device), at first, identification information on a called party with respect to the telephone device is recorded in an outside storage section, then the called party is determined at the repeater based on the recorded identification information on the called party upon receipt of the telephone call from the telephone device. The telephone device is to use a network apart from a telephone network, such as an internet, so as to send the identification information on the called party.

### EFFECT OF THE PRESENT INVENTION

According to the present invention, a transfer processing by a telephone repeater can be performed even if a telephone device is different in manufacturer or type, and also a transfer processing by a telephone device having a data communication function can be performed.

### BEST MODE FOR EMBODIMENT OF THE PRESENT INVENTION

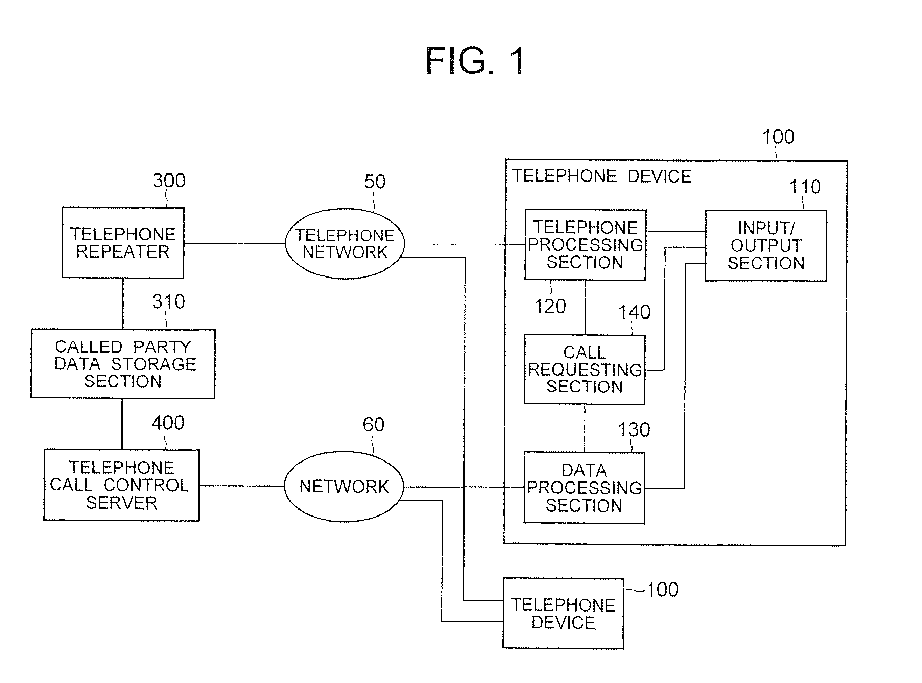

Hereinafter, embodiments of the present invention will be explained with reference to the accompanying drawings. Fig. 1 shows a main configuration of a communication system in the present embodiment, and corresponding parts are shown in the same numerous as in Fig. 5. The communication system of the present embodiment comprises a plurality of telephone devices 100, a telephone repeater 300, a called party data storage section 310, a telephone call control server 400, a telephone network 50 which connects a telephone device 100 and the telephone repeater 300, and a network 60 which connects the telephone device 100 and the telephone call control server 400.

On the basis of a call request from the plurality of connected telephone devices 100 and the telephone repeater 300, the telephone network 50 has a function of establishing a telephone connection with other designated telephone devices 100 or the telephone repeater 300. Here, in a call request, identifier for designating the telephone device 100 or the telephone repeater 300 is called a telephone number. A telephone number can be expressed in any form as far as a telephone device 100 and a telephone repeater 300 can identify the form. The expressive forms are, for example, numeric line, URI (Uniform Resource Identifier) of SIP (Session Initiation Protocol) recited in RFC (Request For Comment)3261(http://www.ietf.org/rfc/rfc3261.txt) and the like.

The telephone repeater 300 has a function of connecting with the telephone device 100 (through the telephone network 50), and a function of transferring a telephone call. Here, a call transfer processing will be explained. The call transfer processing makes it possible to establish telephone communication between a telephone device 100(A) which makes a telephone call to the telephone repeater and another telephone device 100 (B) when the telephone repeater 300 receives the telephone call from the telephone device.

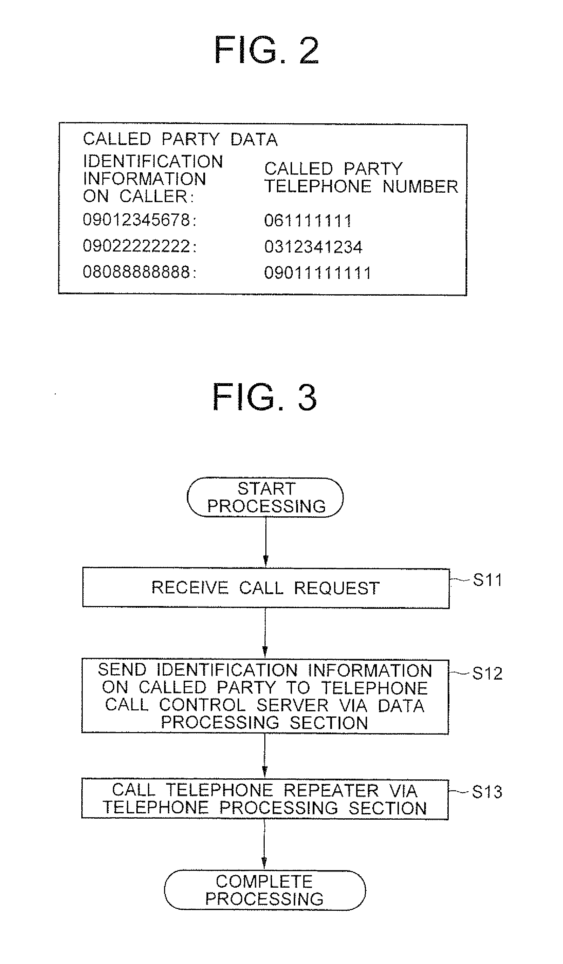

A called party data storage section 310 is to record information with which the telephone repeater 300 determines a forwarding destination in the call transfer processing by the telephone repeater 300. Fig. 2 shows an example of data which is to be stored in the called party data storage section 310. In this example, sets of information for identifying the telephone devices 100 of callers and telephone numbers of telephone devices of the called parties connected from the telephone devices 100 are stored. In this example, telephone numbers themselves are used as the information for identifying the telephone devices 100 of the callers.

For example, the line "09012345678:061111111" means that a telephone call received from a telephone device identified with "09012345678" is to be transferred to a telephone device corresponding to the telephone number "061111111".

The telephone repeater 300 has a function of obtaining information on a telephone number of a forwarding destination based on, and with reference to, the information within the called party data storage section 310 so as to transfer a telephone call. The network 60 has a function of mediating communication between the telephone device 100 and the telephone call control server 400. An example of the network 60 is such as an internet.

The telephone call control server 400 has functions of performing communication with the telephone device 100 through the network 60 and updating the information within the called party data storage section 310 based on designation of the telephone device 100.

In Fig. 1, the plurality of telephone devices 100 has the same configuration, so that the functional block diagram is shown therein only for one of those telephone devices. The telephone device 100 comprises an input/output section 110 having a function with which a user performs input/output, a telephone processing section 120 having a function of performing telephone communication through the telephone network 50, a data processing section 130 having a function of performing data communication through the network 60, and a call requesting section 140 having a function of performing a telephone call processing.

The call requesting section 140 in the telephone device 100 is to maintain information on a telephone number of the telephone repeater 300 (hereinafter, a telephone repeater telephone number) and information for identifying the telephone call control server 400 on the network 60 (hereinafter, identification information on the telephone call control server) inside thereof. Here, the call requesting section 140 may maintain a plurality of telephone repeater telephone numbers and identification information on telephone call control servers, and may use each of them depending on indication from the outside.

Here, steps of establishing telephone connection through the telephone network 50 will be explained. Following is an example where the telephone device 100 (A) makes a telephone call to the telephone device 100 (B) . Telephone communication can be performed in the same way as in the case where the telephone repeater 300 is provided instead of one of the telephone devices 100.

At first, the telephone device 100(A) sends a connecting request to the telephone network 50 designating a telephone number of the telephone device 100(B) as a called party. The telephone network 50 notifies the telephone device 100 (B) corresponding to the called party telephone number of a telephone connecting request. When the telephone device 100(B) responds, telephone connection is established between the telephone device 100(A) and the telephone device 100(B). Along to the above processing, telephone connection is established.

The telephone network 50 has a function to notify the telephone device 100(B) of a telephone connecting request together with identification information on the telephone device 100(A) based on indication from the telephone device 100(A).

A call transfer processing by the telephone repeater 300 is performed in the following procedure. At first, the telephone repeater 300 receives a telephone call from the telephone device 100(A), and establishes telephone connection with the telephone device 100(A). Then, the telephone repeater 300 makes a telephone call to the telephone device 100(B) designated by the telephone device 100(A) and establishes telephone connection with the telephone device 100(B). Finally, the telephone repeater 300 connects a node of the telephone connection established between the telephone repeater 300 itself and the telephone device 100(A) and a node of the telephone connection established between the telephone repeater 300 itself and the telephone device 100 (B) so as to establish telephone connection between the telephone connecting device 100(A) and the telephone connecting device 100 (B).

The above described procedure is an example for call transfer processing, and any procedure can be an option as far as it can establish telephone connection between the telephone device 100(A) and the telephone device 100(B).

The present embodiment is different from a conventional system in the point where the telephone device 100 designates a forwarding destination through the network 60 which is different from the telephone network 50 when the telephone device 100 requests call transfer to the telephone repeater 300.

Next, action of a communication system of the present embodiment will be explained specifically with reference to flow charts in Figs. 3 and 4. Hereinafter, a procedure is described where the telephone repeater 300 transfers a telephone call to the telephone device 100(B) designated by the telephone device 100(A) after receiving the telephone call from the telephone device 100 (A).

The present processing is performed along with the followings.
(1) A telephone call processing from the telephone device 100 to the telephone repeater 300.
(2) A call transfer processing by the telephone repeater 300. The detailed explanation for each processing above will be followed.

(1) With respect to a telephone call processing from the telephone device 100 to the telephone repeater 300: This process is performed by the call requesting section 140 within the telephone device 100(A). Flow of the processing performed by the call requesting section 140 will be presented with reference to Fig. 3. Firstly, the call requesting section 140 receives a telephone call request from the user through input/output section 110 (Step S11). The telephone call request includes identification information on the telephone device 100(B) (hereinafter, identification information on a called party) which is to be a called party.

Any form of the identification information on the called party may be an option as far as the telephone call control server 400 enables to identify a telephone number of a corresponding telephone device 100(B) with the identification information. Examples of the identification information on the called party are such as a telephone number, a terminal ID, a user ID, and an ID on the network 60, of the telephone device 100(B).

Next, the telephone call requesting section 140 designates the telephone call control server 400 to the data processing section 130 with the identification information on the telephone call control server stored inside so as to request the telephone call control server 400 to send the identification information on the telephone device 100(A) itself and the identification information on the called party obtained by step S11 (Step S12).

Here, any form of the identification information on a telephone device 100(A) itself may be an option as far as the telephone device 100(A) can be certainly identified with the information in the communication system. Examples of the identification information on the telephone device 100(A) are such as a telephone number, a terminal ID, a user ID, and an ID on the network 60, of the telephone device 100(A).

The data processing section 130 is connected to the telephone call control server 400 through the network 60 based on designated identification information on the telephone call control server so as to send the identification information on the telephone device 100 (A) and the identification information on the called party. The data processing section 130 may send additional identification information such as an electronic signature and a password when the data processing section 130 is connected to the telephone call control server 400.

Upon receipt of the information from the data processing section 130, the telephone call control server 400 firstly converts the identification information on the called party into a telephone number of the corresponding telephone device. Then, the telephone call control server 400 records a set of identification information on the telephone device 100(A) and the telephone number of the called party (the communication party) as a set of identification information on the caller and the telephone number of the called party as data in the called party data storage section 310. When a telephone number is used as identification information on a called party, this conversion process is not performed.

According to the above, the call requesting section 140 orders explicitly to send identification information on the telephone device thereof, however, the order is not necessary to be explicit. For example, the call requesting section 140 may order to send the identification information on the called party only, and the telephone call control server 400 may obtain the identification information on the telephone device 100 by performing an obtaining process for the identification information on the called party in the communication process with the data processing section 130 of the telephone device 100.

Next, the call requesting section 140 designates a telephone repeater telephone number stored therein so as to request the telephone processing section 120 to make a telephone call to the telephone repeater (Step S13). A telephone processing section 120 notifies the telephone repeater 300 of the identification information thereof through the telephone network 50 based on the designated telephone repeater telephone number so as to perform telephone connection. Here, a formation of the identification information notified is same as one in Step S12.

According to the above processing, a telephone call from the telephone device 100 (A) to the telephone repeater 300 is conducted. The process in Step S13 may be performed after a phase in Step 12 mentioned above where the telephone call requesting section 140 has complete confirmation that the telephone call control server 400 finishes a recording processing.

### (2) Call transfer by a telephone repeater 300:

The present process is to be performed by the telephone repeater 300. Flow of a process performed by the telephone repeater 300 will be presented with reference to Fig. 4. First, the telephone repeater 300 establishes a telephone connection upon receipt of a telephone call from the telephone device 100(A) (Step S21). Next, the telephone repeater 300 obtains identification information on the telephone device 100A of the caller, and checks whether there is data corresponding to the identification information on the caller in the called party data storage section 310 (Step S22).

An example of obtaining the identification information of the telephone device 100(A) of the caller is that the identification information notified by the telephone device 100 (A) is received through the telephone repeater 300. If the telephone repeater 300 cannot obtain the identification information of the telephone device 100(A) of the caller, it is determined that no corresponding data is in the called party data storage section 310.

When it is determined that no corresponding data is in the called party data storage section 310 in Step S22, the telephone repeater 300 concludes the transfer processing. When it is determined in Step S22 that there is corresponding data in the called party data storage section 310, the telephone repeater 300 obtains information on the called party telephone number (that is, a telephone number of the telephone device 100(B)) corresponding to the identification information on the caller from the called party data storage section 310, and transfer to the called party telephone number (Step S23).

Specifically, for example, by establishing a telephone connection with the telephone device 100 (B) corresponding to the called party telephone number, and connecting the end point to a telephone connection with the telephone device 100(A) of the caller, thereby a telephone connection between the telephone device 100(A) of the caller and the telephone device 100(B) of the called party is established. The call transfer processing is conducted by the telephone repeater 300 along to the above procedure.

When it is determined in Step S22 that there is no corresponding data in the called party data storage section 310, the telephone repeater 300 may determine a forwarding destination as in a conventional way so as to perform a call transfer processing.

In the above, the telephone repeater 300 is to conduct the processing in Step S22 after establishing the telephone connection with the telephone device 100(A) in Step S21. However, when the telephone repeater 300 can obtain the identification information on the telephone device 100(A) upon receipt of a connection request from the telephone device 100(A), the telephone repeater 300 may conduct the processing in Step S22 without establishing the telephone connection in Step 21 and may establish the telephone connection in Step S23.

As described above, according to the communication system in the present embodiment, the telephone device 100 designates a forwarding destination through the network 60. Thus, the forwarding destination can be designated as far as the telephone device 100 has a function of performing a data communication through the network 60.

According to the above embodiment, every telephone device 100 is connected to the telephone repeater 300 through the telephone network 50. However, some telephone devices 100 may be connected directly to the telephone repeater 300 without the telephone network 50. In this case, the telephone repeater has a function of performing a telephone connection with a telephone device which is directly connected thereto. Because of this, a transfer processing can be performed with respect to a telephone device which is not connected to the telephone network 50, such as an extension in an office.

According to the above embodiment, the telephone call control server 400 converts the identification information of the called party to a telephone number so as to store it in the called party data storage section 310, and then the telephone repeater 300 utilizes the telephone number. However, the telephone repeater 300 may converts the identification information to the telephone number, instead of the telephone call control server 400. Specifically, the telephone call control server 400 may store the identification information on the called party as it is in the called party data storage section 310, and then the telephone repeater 300 may convert it to the telephone number after obtaining the identification information on the called party.

According to the above embodiment, in Step S13, a form of the identification information on the telephone device 100 itself, which is notified by the telephone processing section 120, is same as the form of identification information used in Step S12. However, the identification information used in Step S13 may be a formation different from that of Step 12. In this case, the form of the identification information on the caller received by the telephone call control server 400 in Step S12 is different from the form of the identification information on the caller received by a telephone repeater 300 in Step S13, so that a converting processing with respect to the form is to be performed in the telephone call control server 400 or in the telephone repeater 300.

According to the above embodiment, the call requesting section 140 receives a call request from the input/output section 110 in Step S11. However, the call requesting section 140 may receive a call request from other sections than the input/output section 110 such as the data processing section 130. For example, the data processing section 130 may send the call requesting section 140 a call request as a result processed by the user using the data processing section 130, and the call requesting section 140 may receive it. This enables the call requesting section 140 to perform a telephone call in cooperation with the processing at other components of the telephone device.

In the embodiment described above, there is no restriction about the telephone number of the called party, however, contents of the identification information on the called party may be restricted at the call requesting section 140, the data processing section 130, or the telephone processing section 120. Further, the restricted contents may be able to be controlled from outside through the network 60. Thereby, forwarding destinations designated by the user can be limited.

According to the flow charts shown in Figs. 3 and 4, it is obvious that an operating procedure is recorded in advance in a recording medium as a program so that the computer can read it to be executed.

### Industrial Availability

According to the present invention as described above, transfer processing can be performed by a telephone repeater even if a telephone device is different in manufacturer or type, and also can be performed by a telephone device having data communication function.

### BRIEF DESCRIPTION OF THE DRAWINGS

Fig. 1 is a block diagram showing a main configuration of a communication system according to an embodiment of the present invention;
Fig. 2 is a diagram showing an example of data stored in a called party data storing section of the communication system according to the embodiment of the present invention;
Fig. 3 is a flow chart showing a telephone call processing performed in the communication system according to the embodiment of the present invention;
Fig. 4 is a flow chart showing a call transfer processing performed in the communication system according to the embodiment of the present invention; and
Fig. 5 is a block diagram showing an outline configuration of a conventional system.

### DESCRIPTION OF REFERENCE NUMERALS

- 50: TELEPHONE NETWORK
- 60: NETWORK
- 100: TELEPHONE DEVICE
- 110: INPUT/OUTPUT SECTION
- 120: TELEPHONE PROCESSING SECTION
- 130: DATA PROCESSING SECTION
- 140: CALL REQUESTING SECTION
- 300: TELEPHONE REPEATER
- 310: CALLED PARTY DATA STORAGE SECTION
- 400: TELEPHONE CALL CONTROL SERVER

## Claims

1. A communication system comprising: a plurality of telephone devices, a communication device which transfers a telephone call received from one of the plurality of telephone devices to another telephone device, and a telephone network which connects the telephone devices and the communication device, wherein
the telephone devices have a function of sending identification information on a called party which indicates a destination telephone device, and
the communication device has functions of recording the identification information on the called party from the telephone device, and determining a telephone device of the called party based on the identification information on the called party upon receipt of a telephone call from the telephone device.

2. The communication system, as claimed in claim 1, wherein the telephone device sends the identification information on the called party through a communication network which is different from the telephone network.

3. The communication system, as claimed in claim 2, wherein the communication network is an internet.

4. The communication system, as claimed in claim 1, wherein the telephone device has a function of making a telephone call to the called party at a different time than sending the identification information on the called party.

5. The communication system, as claimed in claim 1, wherein the identification information on the called party is a telephone number given to the telephone device.

6. A method of transfer control in a communication system comprising a plurality of telephone devices, a communication device which transfers a telephone call received from one of the plurality of telephone devices to another telephone device, and a telephone network which connects the telephone devices and the communication device, the method comprising:
a sending step in which identification information on a called party is sent from the telephone device to the communication device, and
a determining step in which the communication device determines a forwarding destination based on the recorded identification information on the called party upon receipt of a telephone call from the telephone device.

7. The method of transfer control, as claimed in claim 6, wherein the identification information on the called party is sent through a communication network which is different from the telephone network.

8. The method of transfer control, as claimed in claim 7, wherein an internet is used as the communication network which is different from the telephone network.

9. The method of transfer control, as claimed in claim 6, wherein the time when the identification information on the called party is sent and the time when the called party is called are different.

10. The method of transfer control, as claimed in claim 6, wherein a telephone number given to the telephone device is used as the identification information on the called party.

11. A telephone device which is connected to a telephone device of a called party through a communication device, the telephone device comprising the function of:
sending identification information on a called party for identifying the telephone device of the called party to the communication device in a preliminary stage of a telephone call to the called party.

12. The telephone device, as claimed in claim 11, wherein the identification information on the called party for identifying the telephone device of the called party is sent through a communication network which is different from the telephone network.

13. The telephone device, as claimed in claim 12, wherein the communication network is an internet.

14. The telephone device, as claimed in claim 11, wherein the identification information on the called party is a telephone number.

15. A communication device which connects a telephone device of a caller and a telephone device of a called party comprising the functions of:
recording identification information on the called party from the telephone device; and
determining the telephone device of the called party based on the identification information on the called party upon receipt of a telephone call from the telephone device.

16. A communication program with which a processing for connecting a telephone device of a caller and a telephone device of a called party through a communication device is conducted, the communication program causing :
the telephone device to perform a function of sending identification information on the called party which indicates a destination telephone device; and
the communication device to perform functions of recording the identification information on the called party from the telephone device, and determining the telephone device of the called party based on the identification information on the called party upon receipt of a telephone call from the telephone device.

17. A communication program causing:
a telephone device connected to a telephone device of a called party through the communication device to perform a function of sending identification information on the called party for identifying the telephone device of the called party to the communication device in a preliminary stage of a telephone call to the called party.

18. A communication program causing:
a communication device which connects a telephone device of a caller and a telephone device of a called party to record identification information on the called party from the telephone device; and to determine the telephone device of the called party based on the identification information on the called party upon receipt of a telephone call from the telephone device.
